# EUROPEAN PATENT SPECIFICATION

(11) **EP 4 270 820 B1**
(45) Date of publication and mention of the grant of the patent: **31.07.2024**
(21) Application number: 22305610.2
(22) Date of filing: 26.04.2022
(51) Int. Cl.: H04B 10/118, H04B 10/50

(54) **LASER COMMUNICATION TERMINAL**
LASER-KOMMUNIKATIONSTERMINAL
TERMINAL DE COMMUNICATION LASER

(43) Date of publication of application: 01.11.2023
(73) Proprietor: Airbus Defence and Space GmbH, 82024 Taufkirchen (DE)
(72) Inventor: KOEHLER, Jess, 31402 TOULOUSE CEDEX 4 (FR)
(74) Representative: Plasseraud IP

(56) References cited:
- CN-A- 112 198 646
- JP-A- H02 264 528
- US-A1- 2014 294 399
- US-B1- 6 268 944

## Description

The invention relates to a laser communication terminal.

### -- BACKGROUND OF THE INVENTION --

Laser communication terminals have been used for several years for communications between in-orbit satellites or between an in-orbit satellite and a ground station located on the Earth. Indeed, laser communications have several advantages over radiofrequency communications, in particular high throughput and limited transverse extent of the transmitted signals.

However, there is a continuing need in simplifying the structure of the laser communication terminals so that they are smaller and lighter in weight, while providing improved communication capacities. In particular, the present invention aims at producing the following improvements:
- terminals with less components,
- less crosstalk between the transmission path and the reception path within the terminal,
- simplification of the beam steering mechanism, and
- polarization-maintaining transmission path so that the terminal can implement polarization-multiplexing.

In this context, one object of the present invention consists in providing a new laser communication terminal which meets at least one of these needs or others.

Relevant prior art laser communication terminals are disclosed in US6268944B1, CN112198646A, JPH02264528A and US2014/294399A1.

### -- SUMMARY OF THE INVENTION --

To this end, a first aspect of the present invention proposes a laser communication terminal that comprises:
- a telescope, which has at least one pupil and a focal plane;
- at least one light delivery system, arranged for delivering light signals to be transmitted by the terminal when used to another laser communication terminal, called opposite terminal, so that the transmitted light signals propagate through the telescope and outside the terminal along a transmission direction while originating from a source area which is located at a first location in the focal plane, or resulting from a virtual source area which is located at the first location in the focal plane; and
- a light detection section, arranged for collecting received light signals from a light entrance area which is located at a second location in the focal plane, the second location being such that the received light signals are focused by the telescope onto the light entrance area after propagation from the opposite terminal along a reception direction.

According to a first feature of the invention, the first location and the second location are apart from each other within the focal plane, so that the source area or virtual source area and the light entrance area are disjoint.

According to a second feature of the invention, the terminal further comprises a tilt arrangement at the pupil of the telescope for dividing this pupil into first and second parts, such that the transmission direction of the terminal is conjugated with the first location in the focal plane by the telescope through the first part of the pupil, and the reception direction of the terminal is conjugated with the second location in the focal plane also by the telescope but through the second part of the pupil, while the transmission direction and reception direction are parallel outside the terminal. Put another way, the tilt arrangement compensates for the spatial separation between the first and second locations in the focal plane of the telescope, through optical conjugation by the telescope, thus ensuring that the transmission and reception directions of the terminal are parallel. Thus, the invention terminal implements in-field separation between the transmission path and reception path, thanks to the first and second locations being apart from each other in the focal plane of the telescope and combined with the tilt arrangement.

The invention terminal is compatible with the light delivery system in the transmission path and the light detection section in the reception path which are based at least partially on optical fibres within the terminal. Such designs that use optical fibres allow reducing the overall size and weight of the terminal.

In addition, the invention provides combination of both transmission path and reception path within one and same terminal without implementing components dedicated to beam superposition. This participates in reducing optical crosstalk from the transmission to the reception paths within the terminal.

Furthermore, the invention terminal is compatible with using a simplified acquisition and tracking system. Indeed, such simplified acquisition and tracking system may be based on small and large pointing sensing detectors, such as quadrant diodes, for performing fine and coarse pointing detections respectively, instead of using an acquisition and tracking system that is based on an additional imaging optics and dedicated image sensor.

The terminal may further comprise at least one actuator that is combined with the light delivery system and arranged for moving the source area or virtual source area in the focal plane of the telescope. In this way, the transmission direction varies in accordance with shifts of the first location, thereby allowing adjustment of this transmission direction. Such steering mechanism may be simple and light, for example when based on piezoelectric actuators. It can then be simpler and lighter in weight than steering mechanisms that are based on rotatable mirror(s).

The terminal may also further comprise at least one actuator that is combined with the light detection section and arranged for moving the light entrance area in the focal plane of the telescope. In this way, the reception direction varies in accordance with shifts of the second location, thereby allowing adjustment of this reception direction. Operating this at least one actuator of the light detection section makes it possible to finely superpose the reception direction with the transmission direction.

In possible embodiments of the invention, the tilt arrangement may comprise two mirror parts which are angularly offset with respect to each other. Then, one of the mirror parts is dedicated to reflecting the transmitted light signals, and the other one is dedicated to reflecting the received light signals. Such mirror-based design for the tilt arrangement avoids chromatic effects and can be easily integrated in the terminal. In addition, if the mirror parts are arranged so that the transmitted light signals are reflected by the corresponding mirror part with incidence direction close to normal direction, no significant polarization alteration is caused by the tilt arrangement.

In preferred embodiments of the invention, the telescope may comprise at least a primary mirror and a secondary mirror, and possibly a tertiary mirror, and be arranged so that the pupil is superposed with the primary mirror. In such case, the primary mirror may be comprised of the mirror parts which are angularly offset with respect to each other. Put another way, the primary mirror of the telescope may be divided into two mirror parts so that the tilt between these mirror parts compensates for the distance between the first and second locations in the focal plane.

Generally, the telescope may be a three-mirror anastigmat.

More preferably, the telescope may have an axial configuration and be rotationally symmetrical. Thus, the telescope may exhibit rotational symmetry about its optical axis, allowing that it operates with the transmitted light signals being reflected by the mirrors with small angle with respect to the optical axis. Thank to this, the telescope can maintain polarization of the transmitted light signals in a simple manner, without producing crosstalk between polarizations that are orthogonal to each other. The terminal can then be used for implementing polarization-multiplexing at least for transmission.

In particular, the telescope may be of Paul-Baker type. Using this telescope type participates in obtaining a laser communication terminal that is reduced in size.

Then, both mirror parts of the primary mirror may advantageously have each an annular shape about an optical axis of the telescope, and be nested in one another. In such case, that one of both annular mirror parts of the primary mirror that is closer to the optical axis of the telescope may preferably be dedicated to reflecting the transmitted light signals so that these transmitted light signals as delivered by the light delivery system propagate along the transmission direction outside the terminal. The other one of the mirror parts of the primary mirror, which is further from the optical axis of the telescope, may then be dedicated to reflecting the received light signals which have propagated along the reception direction outside the terminal, so that these received light signals are focused onto the second location in the focal plane. In this way, the mirror part which is dedicated to the reception path can be largest than that dedicated to the transmission path, consistently with the received light signals having generally much less intensity than the transmitted ones. In such advantageous embodiments of the invention, the terminal may further comprise a disk-shaped opaque shield which is arranged between the focal plane of the telescope and a last mirror of the telescope, so as to occlude at least partially an inside of an inner cone of a beam of the received light signals. Such shield can be efficient for reducing straylight that could enter otherwise into the light detection section. The last mirror of the telescope may be a tertiary mirror in case of a three-mirror telescope.

In preferred embodiments which implement rotationally symmetrical telescopes, the light delivery system may comprise at least one lens composed of a refracting material bounded by input and output lens surfaces, one of these input and output lens surfaces being conical and the other one toroidal. Then, the light delivery system may be arranged so that the transmitted light signals propagate through the at least one lens, and this latter may be designed so that the transmitted light signals have, between the light delivery system and the telescope, a maximum intensity between an inner cone and an outer cone, and intensity values inside the inner cone and outside the outer cone that are less than intensity values effective between the inner and outer cone. The inner and outer cones match inner and outer edges, respectively, of the mirror part that is dedicated to reflecting the transmitted light signals.

Possibly, the light delivery system may comprise two lenses arranged so that the transmitted light signals propagate through these two lenses in series. Then, the light delivery system may further comprise a beam spread tuning device which is suitable for adjusting a separating distance between both lenses, so as to tune an angular spread of the transmitted light signals.

According to a first possible invention improvement, the light delivery system and the light detection section may be advantageously contained in separated opaque first and second enclosures, respectively. To this end, the first enclosure is provided with a first window for the transmitted light signals to exit therefrom, and the second enclosure is provided with a second window for the received light signals to enter therein. Optical crosstalk from the transmission path to the reception path is further limited in this way.

According to a second possible invention improvement, the terminal may further comprise an additional light delivery system which is arranged for delivering additional light signals to be transmitted by the terminal through the telescope while originating from the source area located at the first location in the focal plane, or resulting from the virtual source area located at this first location in the focal plane. Then, the light delivery system and the additional light delivery system may be adapted so that respective polarisations of the transmitted light signals and additional transmitted light signals are orthogonal to each other. The terminal can thus implement polarization-multiplexing for transmission. Possibly, the respective polarisations of the transmitted light signals and additional transmitted light signals may be linear polarizations which are perpendicular to each other.

According to a further improvement, the additional light delivery system may comprise a superposition tuning system which is adapted to move a location in the focal plane where the additional transmitted light signals cross the focal plane. Such superposition tuning system may operate so that this crossing location of the additional transmitted light signals is superposed with the first location as implemented by the light delivery system. Polarization-multiplexed light signals can thus be transmitted by the terminal to the opposite terminal.

A second aspect of the invention proposes a satellite which comprises a laser communication terminal that is in accordance with the first invention aspect, this terminal being on board the satellite.

A third aspect of the invention proposes a process for implementing communication between a first laser communication terminal and a second laser communication terminal, in which at least one of these first and second laser communication terminals, referred to as in-field separation terminal, is in accordance with the first invention aspect. In particular, the in-field separation terminal may be on board a satellite which orbits the Earth. The other terminal may be either on board another satellite or located on the Earth, or on board an aircraft in the Earth atmosphere.

A fourth aspect of the invention proposes a light delivery system that comprises at least one lens composed of a refracting material bounded by input and output lens surfaces, at least one of these input and output lens surfaces being conical and at least another one toroidal. The light delivery system is arranged so that light originating from one entrance point of this light delivery system propagates through the at least one lens, and this latter may be designed so that the light as exiting the light delivery system has a maximum intensity between coaxial inner and outer cones, and intensity values inside the inner cone and outside the outer cone that are less than intensity values effective between the inner and outer cones. Thus, the light delivery system produces annular split of the light that originates from the entrance point.

In preferred embodiments of the fourth invention aspect, the light delivery system may comprise first and second lenses arranged so that the light propagates through the first lens and then the second lens from the entrance point. Possibly, input and output lens surfaces of the first lens may be conical and toroidal respectively, and input and output lens surfaces of the second lens may be toroidal and conical respectively. The toroidal lens surfaces are designed to produce the annular split of the light with rotational symmetry about an optical axis common to the first and second lenses. The input lens surface of the first lens may be designed for collimating the light that originates from the entrance point between the input and output lens surfaces of this first lens.

Possibly, the first and second lenses may be designed so that the light originating from the entrance point and exiting the light delivery system is divergent from a virtual source location. This virtual source location is then a common apex of both inner and outer cones. The conical output lens surface of the second lens may be designed to make the virtual source location point-like.

The light delivery system may further comprise a beam spread tuning device which is suitable for adjusting a separating distance between both first and second lenses, so as to tune an angular spread of the exiting light. Such beam spread tuning device allows adjusting apex angles of the inner and outer cones.

Finally, a fifth aspect of the invention proposes a light emission apparatus that comprises a light delivery system as provided by the fourth invention aspect and a telescope having mid-obscuration. The light delivery system is arranged so that the virtual source location is situated within a focal plane of the telescope, and the inner cone matches the mid-obscuration of the telescope. Light energy waste is reduced in this way. In particular, the telescope may be of an axial type, in which telescope mirrors are perpendicular to an optical axis of the telescope. Possibly, the mid-obscuration may be due to a center aperture of a primary mirror of the telescope. The light emission apparatus of the fifth invention aspect may be a light emission-reception apparatus. In such case, the light delivery system of the fourth invention aspect may be used in the emission path of the emission-reception apparatus, but such optical system may alternatively be used in the reception path of the emission-reception apparatus, or used in both its emission path and reception path.

The fourth and fifth invention aspects are independent from the first to third ones.

### -- BRIEF DESCRIPTION OF THE DRAWINGS --

Figure 1 shows a telescope that may be used in a laser communication terminal in accordance with the present invention;
Figure 2 is an optical diagram of a beam shaping optics that may be used in the laser communication terminal considered for Figure 1;
Figure 3 shows a possible arrangement of a light delivery system and light detection section which may be implemented in the laser communication terminal considered for figures 1-2; and
Figure 4 illustrates a possible use of the laser communication terminal considered for figures 1-3.

For clarity sake, element sizes which appear in these figures do not correspond to actual dimensions or dimension ratios. Also, same reference numbers which are indicated in different ones of these figures denote identical elements of elements with identical function.

### -- DETAILED DESCRIPTION OF THE INVENTION --

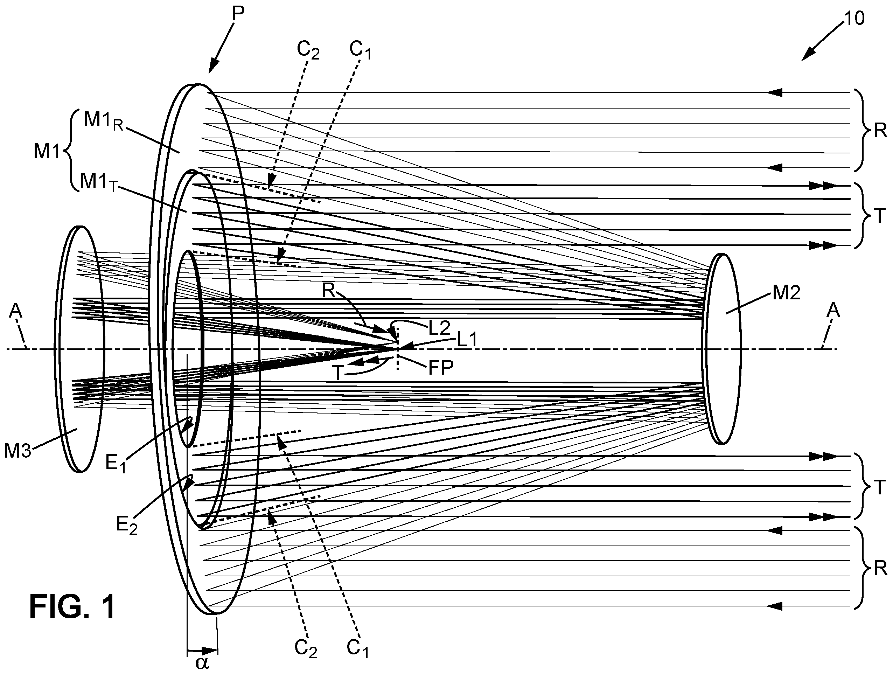

In Figure 1, reference number 10 generally denotes a telescope. In the particular embodiment of the invention now described, the telescope 10 is of Paul-Baker type. It is rotationally symmetrical about an optical axis A-A, and comprised of a primary mirror M1, a secondary mirror M2 and a tertiary mirror M3. The mirrors M1 and M3 are concave, and the mirror M3 is convex. The telescope 10 is arranged so that light impinging onto the primary mirror M1 is reflected by this latter towards the secondary mirror M2, also reflected by this latter and then by the tertiary mirror M3 so as to focus into a focal plane FP of the telescope 10. In addition, the primary mirror M1 forms an entrance pupil P of the telescope 10. Such Paul-Baker telescope is well-known, so that it is not necessary to further describe it here except its modification for the invention.

For implementing the invention with such telescope 10, the primary mirror M1 with its initial optical shape suitable for Paul-Baker operation is divided into two mirror parts M1_{T} and M1_{R}. Preferably, these mirror parts have respective annular shapes without overlapping, and are nested in one another. For example, the mirror part M1_{T} is closer to the optical axis A-A than the mirror part M1_{R}. The separation between both mirror parts M1_{T} and M1_{R} is a ring-like gap with minimum width. Each of these mirror parts M1_{T} and M1_{R} have the initial shape of the primary mirror M1 in the Paul-Baker design. Also for implementing the invention, mirror part M1_{R} is tilted with respect to mirror part M1_{T} by an angular offset α, but without translation parallel to the optical axis A-A. Both mirror parts M1_{T} and M1_{R} so-oriented are fixed. Thus, a light beam T that originates from a point source located within the focal plane FP is transmitted outwardly by the telescope 10 as a collimated beam. If the point source is located at the crossing of optical axis A-A with the focal plane FP, and if the light beam T is reflected by the mirror part M1_{T} of the primary mirror M1 selectively with respect to the mirror part M1_{R}, then the transmission direction is parallel to the optical axis A-A outside the telescope 10. Simultaneously, a received light beam R which enters the telescope 10 parallel to the optical axis A-A and is reflected by the mirror part M1_{R} of the primary mirror M1, then reflected by the mirrors M2 and M3, is focused into the focal plane FP at a location which is apart from the point source of the transmitted beam T, due to the tilt angle α. In Figure 1, the location of the point source of the transmitted light beam T in the focal plane FP is denoted by L1, and the focus location of the received light beam R also in the focal plane FP is denoted by L2. L1 and L2 have been called first and second locations, respectively, in the general part of the present description. How the transmitted light beam T and received light beam R are reflected each selectively by the mirror part M1_{T} and M1_{R}, respectively, will be explained later below.

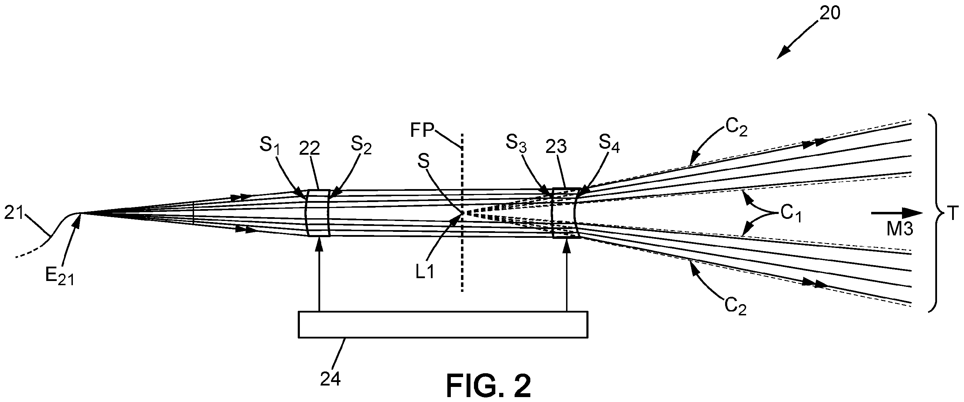

With reference to Figure 2, a light delivery system 20 comprises a signal generation section (not shown) and a beam shaping optics. The signal generation section produces light signals to be transmitted by the laser communication terminal, and the beam shaping optics arranges these light signals into a beam that has suitable shape for transmission through the telescope 10 of Figure 1. The beam shaping optics may be fed with the light signals to be transmitted by the signal generation section through an optical fibre 21. E₂₁ denotes the exit end of the optical fibre 21. In a known manner, the fibre exit end E₂₁ is provided with suitable optics for delivering the free-space propagating beam of the light signals to be transmitted T. The beam shaping optics may comprise two lenses 22 and 23 which are aligned on the travel path of the beam, and both composed of a refracting material which may be fused silica (SiO₂). In the present embodiment, lens 22 has a conical input surface S₁ and a toroidal output surface S₂, and lens 23 has a toroidal input surface S₃ and a conical output surface S₄. The conical input surface S₁ of lens 22 may be designed so that the beam of the light signals to be transmitted T is collimated within this lens 22 between the lens surfaces S₁ and S₂. The lens surfaces S₁-S₄ are also designed so that the beam of transmitted light signals T as produced by the beam shaping optics is divergent from a virtual point source S, and so that its energy distribution is mainly contained between two cones C₁ and C₂. These cones C₁ and C₂ that determine the angle range entering the telescope 10 on M3-side are primarily determined by the numerical aperture of the exit end E₂₁ of the optical fibre 21. Then, the toroidal lens surfaces S₂ and S₃ produce angular split of the beam with rotational symmetry about an optical axis common to the lenses 22 and 23, whereas the conical lens surfaces S₁ and S₄ make the virtual source S point-like. The cones C₁ and C₂ have been called inner cone and outer cone in the general part of the present description. The light delivery system 20 is to be arranged within the invention laser communication terminal so that the virtual point source S is in the focal plane FP of the telescope 10, and the beam of transmitted light signals T is directed towards the tertiary mirror M3 for transmission outwards through the telescope 10.

Simultaneously, the separating distance between both lenses 22 and 23 is adjusted so that the cones C₁ and C₂ after light reflection on the mirrors M3 and M2 substantially match inner and outer circular edges E₁ and E₂ of the mirror part M1_{T} of the primary mirror M1 (see Figure 1). Possibly, a beam spread tuning device 24 may be dedicated to finely tune the separating distance between both lenses 22 and 23, and thus adjusting the apex angles of the cones C₁ and C₂. Translating the lens 22 closer to the lens 23 reduces the apex angles of both cones C₁ and C₂ without moving the virtual point source S in the focal plane FP and out of it. The location of the virtual point source S in the focal plane FP of the telescope 10 is denoted L1 and has been called first location in the general part of the present description. Considering that the beam of transmitted light signals T may actually exhibit wavefront error, this beam seems to originate from a virtual source area which is centred on the location L1. In a known manner, moving the location L1 within the focal plane FP of the telescope 10 allows changing the transmission direction that is effective outside the laser communication terminal. Such moving of the location L1 may be produced using an appropriate actuator assembly (not shown) that operates onto the components 21-23 of the light delivery system 20. In this way, pointing of the laser communication terminal can be performed without requiring any steering mirror. Two-dimensional piezoelectric actuator assemblies may be used for this pointing function.

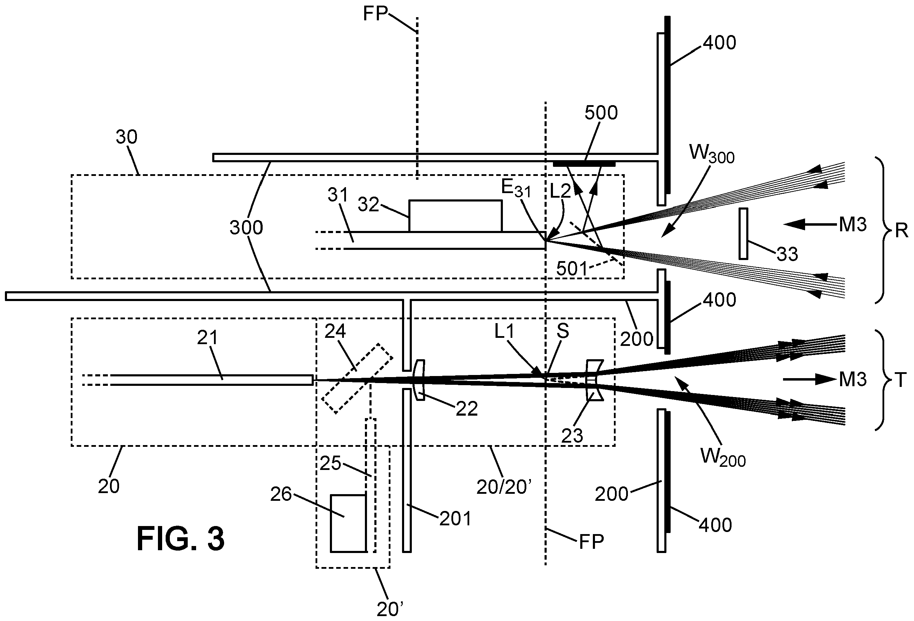

Referring now to Figure 3, the light delivery system 20 is accommodated in an opaque enclosure 200 for reducing an amount of straylight that could originate from the light delivery system 20 and cause crosstalk between the transmission and reception paths of the laser communication terminal. The enclosure 200 is provided with a window W₂₀₀ for allowing the beam of transmitted light signals T to exit the enclosure 200 towards the tertiary mirror M3 of the telescope 10. Advantageously, an additional windowed wall 201 may be provided between the optical fibre 21 and the lens 22 for further reducing optical crosstalk due to straylight produced by the light delivery system 20. The walls of the enclosure 200 and wall 201 are preferably of a light-absorbing material for reducing undesired light reflections.

The laser communication terminal also comprises a light detection section 30 which is accommodated in another opaque enclosure 300. The beam of received light signals R as forwarded by the telescope 10 penetrates the enclosure 300 through a dedicated window W₃₀₀ and focusses in the focal plane FP at a location L2. This latter location L2 has been called second location in the general part of the present description. In possible invention embodiments, the light detection section 30 may comprise another optical fibre 31 with fibre end E₃₁ that is arranged for collecting the received light signals R at location L2. Due to finite effective cross-sectional area of the optical fibre 31, this cross-sectional area at the fibre end E₃₁ constitutes a light entrance area of the light detection section 30. The beam of the received light signals R as focused by the telescope 10 exhibits small diffraction effects, so that it can be entered directly into the optical fibre 31 at the focal plane FP. For example, suitable parameters for the optical fibre 31 may be a diameter of at least 30 µm (micrometre) and a numerical aperture of 0.22. This latter value for the numerical aperture of the optical fibre 31 suits to the beam of the received light signals R possibly having a high angle range as reflected by the tertiary mirror M3. The fibre end E₃₁ may be mounted onto a two-dimensional translating actuator 32 which allows moving the location L2 within the focal plane FP. Thus, the actuator 32 makes it possible to tune a reception direction of the laser communication terminal through the telescope 10. Practically, this reception direction is to be parallel to the transmission direction thanks to appropriate adjustment of the actuator 32. When the reception and transmission directions are made parallel in this way, the separation distance between the locations L1 and L2 within the focal plane FP compensates exactly for the tilt angle α between the mirror parts M1_{T} and M1_{R}. This separation distance between the locations L1 and L2 allows arranging the light delivery system 20 and the light detection section 30 apart from each other, without using any beam splitter such as a separating plate. This has been called in-field separation in the general part of the present description. Thanks to such in-field separation, optical crosstalk between the transmission and reception paths is reduced in a large extent. The value of the tilt angle α is selected large enough for the received light signals that have been reflected by the mirror part M1_{T} to focus out of the light entrance area of the light detection section 30. This ensures that only the part of the received light signals that has been reflected by the mirror part M1_{R} is detected by the light detection section 30, with exclusion of the other part of these reflected light signals that has been reflected by the mirror part M1_{T}. For example, the tilt angle α may equal 0.8° (degree), corresponding to a separating distance between the locations L1 and L2 of about 10 mm (millimetre) when a focal length of the telescope 10 is 700 mm.

For further reducing optical crosstalk due to straylight originating from part of the transmitted light signals that would penetrate the light detection section 30 through the window W₃₀₀, a disk-shaped opaque shield 33 may be arranged in front of this window W₃₀₀. This shield 33 and a peripheral limit of the window W₃₀₀ are advantageously sized so as to selectively allow the rays of received light signals that have been reflected by the primary mirror M1 to penetrate the enclosure 300. The shield 33 may be out of the same light-absorbing material as the walls of the enclosures 200 and 300.

In Figure 3, reference number 400 denotes a coarse pointing detection system that is useful for orienting another laser communication terminal, called opposite terminal, towards this terminal. Reference number 500 denotes a fine pointing detection system dedicated to allowing fine tuning of the transmission direction of the opposite terminal. Advantageously, the fine pointing detection system 500 may be arranged within the enclosure 300 and combined with the light detection section 30 using a semi-transparent plate 501. In a known manner, such coarse and fine pointing detection systems may be comprised of coarse and fine acquisition quadrant diodes, respectively.

The improvement now described provides polarization-multiplexing for the light signals to be transmitted by the invention laser communication terminal. Indeed, since the telescope 10 is almost rotationally symmetric (excepting the tilt angle α) about its optical axis A-A, and its mirrors M1-M3 are operated with angle-of-incidence values close to 90° (degree), the telescope 10 does not significantly alter a polarization of the light signals which are produced by the light delivery system 20. Put another way, the telescope 10 is polarization-maintaining. Then, the laser communication terminal may comprise another light delivery system 20' in addition to that already described and labelled 20. Advantageously, the additional light delivery system 20' may share the beam shaping optics with system 20. For example, the additional light delivery system 20' comprises an additional signal generation section (not shown) that supplies additional light signals to be transmitted through an optical fibre 25. The additional light signals that are supplied through the optical fibre 25 may be superposed to those supplied by the optical fibre 21 using a separating plate 24, possibly combined with a compensating plate in a known manner. Then, an exit end of the optical fibre 25 may be supported by an actuator 26, possibly again of the two-dimensional piezoelectric actuator type. The actuator 26 is suitable for translating transversally the exit end of the optical fibre 25, so that the additional light signals to be transmitted form after the lenses 22 and 23 a divergent beam that seems to also originate from the virtual light source S at location L1. For polarization-multiplexing, the signal generation sections that are connected separately through the optical fibres 21 and 25 provide respective light signals for transmission that have orthogonal polarizations. These optical fibres 21 and 25 are then preferably polarization-maintaining optical fibres. For example, the light signals that exit from the optical fibre 21 may have a linear polarization oriented parallel to the plane of Figure 3, and those exiting from the optical fibre 25 may have another linear polarization oriented perpendicular to the plane of Figure 3. In such case, all transmitted light signals may have same wavelength value whatever their polarization.

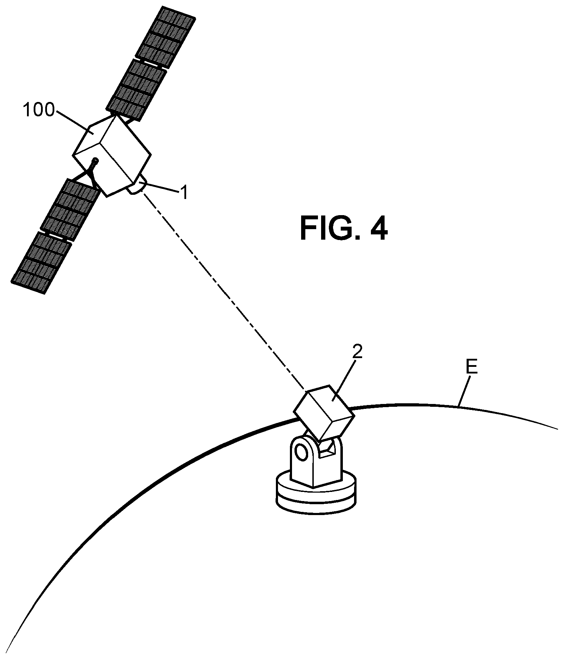

Figure 4 illustrates a possible use of the invention laser communication terminal that has been just described. This invention terminal, i.e. in-field separation terminal, is denoted by reference number 1. It is located fixedly on board a satellite 100 which orbits the Earth. Reference letter E indicates the Earth. Another laser communication terminal 2 is located on the Earth. This latter terminal 2 has been called opposite terminal with respect to terminal 1. It may also be an in-field separation terminal which exploits the present invention. Each of the terminals 1 and 2 can transmit and receive laser signals to or from the other one through the Earth atmosphere, thereby providing communication sessions. Such communication sessions may be useful for transmitting image data from terminal 1 to terminal 2, for example.

One must keep in mind that the invention disclosed here-above can be reproduced while modifying secondary aspects thereof but maintaining at least some of the mentioned advantages. In particular, the following modifications can be implemented without difficulty:
- the beam shaping optics may have any other structure, including with a lens number other than two and possibly producing a real point source instead of the virtual point source S within the focal plane FP of the telescope 10;
- the real or virtual point source produced by the beam shaping optics may be offset with respect to the optical axis A-A of the telescope 10, so that the transmission direction is angled with respect to the optical axis A-A;
- the type of the telescope 10 may be other than Paul-Baker type;
- the values cited for the tilt angle α and the separating distance between locations L1 and L2 are only supplied as an example; and
- the pupil where the tilt arrangement is located is not necessarily the entrance pupil of the telescope but may be alternately the exit pupil or an intermediate pupil thereof, depending on the whole optical arrangement of the terminal. In case of the entrance pupil, this entrance pupil may not be located at the primary mirror, depending on the telescope type.

## Claims

1. A laser communication terminal (1), comprising:
- a telescope (10), having at least one pupil (P) and a focal plane (FP);
- at least one light delivery system (20), arranged for delivering light signals (T) to be transmitted by the terminal (1) when used to another laser communication terminal, called opposite terminal (2), so that the transmitted light signals propagate through the telescope (10) and outside the terminal along a transmission direction while originating from a source area which is located at a first location (L1) in the focal plane (FP), or resulting from a virtual source area located at said first location in the focal plane; and
- a light detection section (30), arranged for collecting received light signals (R) from a light entrance area which is located at a second location (L2) in the focal plane (FP), the second location being such that the received light signals are focused by the telescope (10) onto the light entrance area after propagation from the opposite terminal (2) along a reception direction,
wherein the first location (L1) and the second location (L2) are apart from each other within the focal plane (FP), so that the source area or virtual source area and the light entrance area are disjoint,
and wherein said transmission direction and reception direction being parallel outside the terminal, **characterized in that** the terminal (1) further comprises a tilt arrangement at the pupil (P) of the telescope (10) arranged for dividing said pupil into first and second parts, such that the transmission direction of the terminal is conjugated with the first location (L1) in the focal plane (FP) by the telescope through the first part of the pupil, and the reception direction of the terminal is conjugated with the second location (L2) in the focal plane also by the telescope but through the second part of the pupil.

2. The terminal (1) of claim 1, wherein the tilt arrangement comprises two mirror parts (M1_{T}, M1_{R}) which are angularly offset with respect to each other, one of said mirror parts being dedicated to reflecting the transmitted light signals (T), and the other one of said mirror parts dedicated to reflecting the received light signals (R).

3. The terminal (1) of claim 2, wherein the telescope (10) comprises at least a primary mirror (M1) and a secondary mirror (M2), and is arranged so that the pupil (P) is superposed with the primary mirror, and said primary mirror is comprised of the mirror parts (M1_{T}, M1_{R}) which are angularly offset with respect to each other.

4. The terminal (1) of claim 3, wherein the telescope (10) has an axial configuration and is rotationally symmetrical, and both mirror parts (M1_{T}, M1_{R}) of the primary mirror (M1) have each an annular shape about an optical axis (A-A) of the telescope, and are nested in one another.

5. The terminal (1) of claim 4, wherein that one of both mirror parts (M1_{T}, M1_{R}) of the primary mirror (M1) that is closer to the optical axis (A-A) of the telescope (10) is that one which is dedicated to reflecting the transmitted light signals (T) so that said transmitted light signals as delivered by the light delivery system (20) propagate along the transmission direction outside the terminal,
and that one of both mirror parts (M1_{T}, M1_{R}) of the primary mirror (M1) that is further from the optical axis (A-A) of the telescope (10) is that one which is dedicated to reflecting the received light signals (R) which have propagated along the reception direction outside the terminal, so that said received light signals are focused onto the second location (L2) in the focal plane (FP).

6. The terminal (1) of claim 5, further comprising a disk-shaped opaque shield (33) which is arranged between the focal plane (FP) of the telescope (10) and a last mirror of said telescope, so as to occlude at least partially an inside of an inner cone (C₁) of a beam of the received light signals (R).

7. The terminal (1) of any one of claims 4 to 6, wherein the light delivery system (20) comprises at least one lens composed of a refracting material bounded by input and output lens surfaces, one of said input and output lens surfaces being conical and the other one of said input and output lens surfaces being toroidal,
said the light delivery system (20) being arranged so that the transmitted light signals (T) propagate through said at least one lens, and said at least one lens being designed so that said transmitted light signals have, between the light delivery system and the telescope (10), a maximum intensity between an inner cone (C₁) and an outer cone (C₂), and intensity values inside the inner cone and outside the outer cone that are less than intensity values effective between the inner and outer cones, and so that said inner and outer cones match inner (E₁) and outer (E₂) edges, respectively, of the mirror part (M1_{T}) dedicated to reflecting the transmitted light signals (T).

8. The terminal (1) of claim 7, wherein the light delivery system (20) comprises two lenses (22, 23) arranged so that the transmitted light signals (T) propagate through said two lenses in series, and further comprises a beam spread tuning device (24) suitable for adjusting a separating distance between both lenses, so as to tune an angular spread of the transmitted light signals.

9. The terminal (1) of any one of the preceding claims, wherein the light delivery system (20) and the light detection section (30) are contained in separated opaque first (200) and second (300) enclosures, respectively, the first enclosure provided with a first window (W₂₀₀) for the transmitted light signals (T) to exit from said first enclosure, and the second enclosure provided with a second window (W₃₀₀) for the received light signals (R) to enter into said second enclosure.

10. The terminal (1) of any one of the preceding claims, further comprising an additional light delivery system (20') which is arranged for delivering additional light signals to be transmitted by the terminal through the telescope (10) while originating from the source area located at the first location (L1) in the focal plane (FP), or resulting from the virtual source area located at said first location in the focal plane, and wherein the light delivery system (20) and the additional light delivery system are adapted so that respective polarisations of the transmitted light signals (T) and additional transmitted light signals are orthogonal to each other.

11. The terminal (1) of claim 10, wherein the respective polarisations of the transmitted light signals (T) and additional transmitted light signals are linear polarizations which are perpendicular to each other.

12. The terminal (1) of claim 10 or 11, wherein the additional light delivery system (20') comprises a superposition tuning system (26) adapted to move a location in the focal plane (FP) where the additional transmitted light signals cross said focal plane, so that said location is superposed with the first location (L1) as implemented by the light delivery system (20).

13. A satellite (100), comprising a laser communication terminal (1) that is in accordance with any one of claims 1 to 12, said terminal being on board the satellite.

14. A process for implementing communication between a first laser communication terminal and a second laser communication terminal, wherein at least one of said first and second laser communication terminals, referred to as in-field separation terminal, is in accordance with any one of claims 1 to 12.

15. The process of claim 14, wherein the in-field separation terminal is on board a satellite (100) which orbits the Earth.

## Patentansprüche

1. Laserkommunikationsterminal (1), aufweisend:
- ein Teleskop (10) mit mindestens einer Blende (P) und einer Brennebene (FP);
- mindestens ein Lichtabgabesystem (20), das zum Abgeben von Lichtsignalen (T) angeordnet ist, die im Gebrauch von dem Terminal (1) an ein anderes Laserkommunikationsterminal, das als gegenüberliegendes Terminal (2) bezeichnet wird, gesendet werden sollen, sodass sich die gesendeten Lichtsignale durch das Teleskop (10) und außerhalb des Terminals entlang einer Senderichtung ausbreiten, während sie von einem Quellenbereich ausgehen, der sich an einer ersten Stelle (L1) in der Brennebene (FP) befindet, oder aus einem virtuellen Quellenbereich resultieren, der sich an der ersten Stelle in der Brennebene befindet; und
- einen Lichterfassungsabschnitt (30), der zum Sammeln von empfangenen Lichtsignalen (R) von einem Lichteintrittsbereich angeordnet ist, der sich an einer zweiten Stelle (L2) in der Brennebene (FP) befindet, wobei die zweite Stelle derart beschaffen ist, dass die empfangenen Lichtsignale durch das Teleskop (10) auf den Lichteintrittsbereich fokussiert werden, nachdem sie sich von dem gegenüberliegenden Terminal (2) entlang einer Empfangsrichtung ausgebreitet haben,
wobei die erste Stelle (L1) und die zweite Stelle (L2) innerhalb der Brennebene (FP) voneinander getrennt sind, so dass der Quellenbereich oder der virtuelle Quellenbereich und der Lichteintrittsbereich nicht zusammenhängend sind, und wobei die Senderichtung und die Empfangsrichtung außerhalb des Terminals parallel sind,
**dadurch gekennzeichnet, dass** das Terminal (1) ferner eine Neigungsanordnung an der Blende (P) des Teleskops (10) aufweist, die zum Unterteilen der Blende in einen ersten und einen zweiten Teil angeordnet ist, sodass die Senderichtung des Terminals mit der ersten Stelle (L1) in der Brennebene (FP) durch das Teleskop durch den ersten Teil der Blende hindurch konjugiert ist und die Empfangsrichtung des Terminals mit der zweiten Stelle (L2) in der Brennebene ebenfalls durch das Teleskop, aber durch den zweiten Teil der Blende hindurch konjugiert ist.

2. Terminal (1) nach Anspruch 1, wobei die Neigungsanordnung zwei Spiegelteile (M1_{T}, M1_{R}) aufweist, die zueinander winkelversetzt sind, einer der Spiegelteile für die Reflexion der gesendeten Lichtsignale (T) bestimmt ist und der andere der Spiegelteile für die Reflexion der empfangenen Lichtsignale (R) bestimmt ist.

3. Terminal (1) nach Anspruch 2, wobei das Teleskop (10) mindestens einen Primärspiegel (M1) und einen Sekundärspiegel (M2) aufweist und so angeordnet ist, dass die Blende (P) den Primärspiegel überlagert, und der Primärspiegel aus den Spiegelteilen (M1_{T}, M1_{R}) besteht, die zueinander winkelversetzt sind.

4. Terminal (1) nach Anspruch 3, wobei das Teleskop (10) axial und rotationssymmetrisch aufgebaut ist und beide Spiegelteile (M1_{T}, M1_{R}) des Primärspiegels (M1) jeweils eine Ringform um eine optische Achse (A-A) des Teleskops aufweisen und ineinander verschachtelt sind.

5. Terminal (1) nach Anspruch 4, wobei derjenige der beiden Spiegelteile (M1_{T}, M1_{R}) des Primärspiegels (M1), der näher an der optischen Achse (A-A) des Teleskops (10) liegt, derjenige ist, der zum Reflektieren der gesendeten Lichtsignale (T) bestimmt ist, sodass sich die gesendeten Lichtsignale, wie sie von dem Lichtabgabesystem (20) abgegeben werden, entlang der Senderichtung außerhalb des Terminals ausbreiten,
und dass derjenige der beiden Spiegelteile (M1_{T}, M1_{R}) des Primärspiegels (M1), der weiter von der optischen Achse (A-A) des Teleskops (10) entfernt ist, derjenige ist, der zum Reflektieren der empfangenen Lichtsignale (R) bestimmt ist, die sich entlang der Empfangsrichtung außerhalb des Terminals ausgebreitet haben, sodass die empfangenen Lichtsignale auf die zweite Stelle (L2) in der Brennebene (FP) fokussiert werden.

6. Terminal (1) nach Anspruch 5, ferner aufweisend eine scheibenförmige lichtundurchlässige Abschirmung (33), die zwischen der Brennebene (FP) des Teleskops (10) und einem letzten Spiegel des Teleskops angeordnet ist, um mindestens teilweise ein Inneres eines Innenkegels (C₁) eines Strahls der empfangenen Lichtsignale (R) zu verdecken.

7. Terminal (1) nach einem der Ansprüche 4 bis 6, wobei das Lichtabgabesystem (20) mindestens eine Linse aufweist, die aus einem brechenden Material besteht, das durch Eingangs- und Ausgangslinsenflächen begrenzt ist, wobei eine der Eingangs- und Ausgangslinsenflächen konisch und die andere der Eingangs- und Ausgangslinsenflächen toroidal ist,
wobei das Lichtabgabesystem (20) so angeordnet ist, dass sich die gesendeten Lichtsignale (T) durch die mindestens eine Linse ausbreiten, und wobei die mindestens eine Linse so ausgelegt ist, dass die zwischen dem Lichtabgabesystem und dem Teleskop (10) gesendeten Lichtsignale eine maximale Intensität zwischen einem Innenkegel (C₁) und einem Außenkegel (C₂) aufweisen, und Intensitätswerte innerhalb des Innenkegels und außerhalb des Außenkegels aufweisen, die geringer als die Intensitätswerte sind, die zwischen dem Innen- und dem Außenkegel gelten, sodass der Innen- und der Außenkegel mit dem Innenrand (E₁) bzw. dem Außenrand (E₂) des Spiegelteils (M1_{T}) übereinstimmen, der für die Reflexion der gesendeten Lichtsignale (T) bestimmt ist.

8. Terminal (1) nach Anspruch 7, wobei das Lichtabgabesystem (20) zwei Linsen (22, 23) aufweist, die so angeordnet sind, dass sich die gesendeten Lichtsignale (T) durch die beiden Linsen in Reihe ausbreiten, und ferner eine Strahlenausbreitungs-Abstimmungsvorrichtung (24) aufweist, die zum Einstellen eines Trennungsabstands zwischen beiden Linsen geeignet ist, um eine Winkelstreuung der gesendeten Lichtsignale abzustimmen.

9. Terminal (1) nach einem der vorstehenden Ansprüche, wobei das Lichtabgabesystem (20) und der Lichterfassungsabschnitt (30) in getrennten undurchsichtigen ersten (200) bzw. zweiten (300) Gehäusen enthalten sind, wobei das erste Gehäuse mit einem ersten Fenster (W₂₀₀) versehen ist, damit die gesendeten Lichtsignale (T) aus dem ersten Gehäuse austreten können, und das zweite Gehäuse mit einem zweiten Fenster (W₃₀₀) versehen ist, damit die empfangenen Lichtsignale (R) in das zweite Gehäuse eintreten können.

10. Terminal (1) nach einem der vorstehenden Ansprüche, ferner aufweisend ein zusätzliches Lichtabgabesystem (20'), das zum Abgeben von zusätzlichen Lichtsignalen angeordnet ist, die von dem Terminal durch das Teleskop (10) gesendet werden sollen, während sie von dem Quellenbereich ausgehen, der sich an der ersten Stelle (L1) in der Brennebene (FP) befindet, oder aus dem virtuellen Quellenbereich resultieren, der sich an der ersten Stelle in der Brennebene befindet, und wobei das Lichtabgabesystem (20) und das zusätzliche Lichtabgabesystem so ausgelegt sind, dass die jeweiligen Polarisierungen der gesendeten Lichtsignale (T) und der zusätzlichen gesendeten Lichtsignale orthogonal zueinander liegen.

11. Terminal (1) nach Anspruch 10, wobei die jeweiligen Polarisierungen der gesendeten Lichtsignale (T) und der zusätzlichen gesendeten Lichtsignale lineare Polarisierungen sind, die senkrecht zueinander liegen.

12. Terminal (1) nach Anspruch 10 oder 11, wobei das zusätzliche Lichtabgabesystem (20') ein Überlagerungsabstimmungssystem (26) aufweist, das derart zum Verschieben einer Stelle in der Brennebene (FP), an der die zusätzlichen gesendeten Lichtsignale die Brennebene kreuzen, angeordnet ist, dass diese Stelle durch die erste von dem Lichtabgabesystem (20) implementierte Stelle (L1) überlagert wird.

13. Satellit (100), aufweisend ein Laserkommunikationsterminal (1) nach einem der Ansprüche 1 bis 12, wobei sich das Terminal an Bord des Satelliten befindet.

14. Verfahren zum Implementieren einer Kommunikation zwischen einem ersten Laserkommunikationsterminal und einem zweiten Laserkommunikationsterminal, wobei mindestens entweder das erste oder das zweite Laserkommunikationsterminal, das als Infield-Trennungsterminal bezeichnet wird, einem der Ansprüche 1 bis 12 entspricht.

15. Verfahren nach Anspruch 14, wobei sich das Infield-Trennungsterminal an Bord eines Satelliten (100) befindet, der die Erde umkreist.

## Revendications

1. Terminal de communication laser (1) comprenant :
- un télescope (10) ayant au moins une pupille (P) et un plan focal (FP) ;
- au moins un système de délivrance de lumière (20), agencé pour délivrer des signaux lumineux (T) à transmettre par le terminal (1) quand il est utilisé à un autre terminal de communication laser, appelé terminal opposé (2), de sorte que les signaux lumineux transmis se propagent à travers le télescope (10) et à l'extérieur du terminal le long d'une direction de transmission tout en provenant d'une zone de source qui est située à un premier emplacement (L1) dans le plan focal (FP), ou résultant d'une zone de source virtuelle située audit premier emplacement dans le plan focal ; et
- une section de détection de lumière (30), agencée pour collecter des signaux lumineux reçus (R) à partir d'une zone d'entrée de lumière qui est située à un second emplacement (L2) dans le plan focal (FP), le second emplacement étant tel que les signaux lumineux reçus soient focalisés par le télescope (10) sur la zone d'entrée de lumière après propagation à partir du terminal opposé (2) le long d'une direction de réception,
dans lequel le premier emplacement (L1) et le second emplacement (L2) sont séparés l'un de l'autre à l'intérieur du plan focal (FP), de sorte que la zone de source ou zone de source virtuelle et la zone d'entrée de lumière soient disjointes,
et dans lequel ladite direction de transmission et ladite direction de réception sont parallèles à l'extérieur du terminal, **caractérisé en ce que** le terminal (1) comprend en outre un agencement d'inclinaison au niveau de la pupille (P) du télescope (10), agencé pour diviser ladite pupille en première et seconde parties, de manière que la direction de transmission du terminal soit conjuguée avec le premier emplacement (L1) dans le plan focal (FP) par le télescope à travers la première partie de la pupille, et la direction de réception du terminal soit conjuguée avec le second emplacement (L2) dans le plan focal aussi par le télescope mais à travers la seconde partie de la pupille.

2. Terminal (1) selon la revendication 1, dans lequel l'agencement d'inclinaison comprend deux parties de miroir (M1_{T}, M1_{R}) qui sont décalées angulairement l'une par rapport à l'autre, une desdites parties de miroir étant dédiée à réfléchir les signaux lumineux transmis (T), et l'autre desdites parties de miroir étant dédiée à réfléchier les signaux lumineux reçus (R).

3. Terminal (1) selon la revendication 2, dans lequel le télescope (10) comprend au moins un miroir primaire (M1) et un miroir secondaire (M2), et est agencé de manière que la pupille (P) soit superposée avec le miroir primaire, et ledit miroir primaire est constitué des parties de miroir (M1_{T}, M1_{R}) qui sont décalées angulairement l'une par rapport à l'autre.

4. Terminal (1) selon la revendication 3, dans lequel le télescope (10) possède une configuration axiale et est symétrique par rotation, et les deux parties de miroir (M1_{T}, M1_{R}) du miroir primaire (M1) ont chacune une forme annulaire autour d'un axe optique (A-A) du télescope et sont imbriquées l'une dans l'autre.

5. Terminal (1) selon la revendication 4, dans lequel celle des deux parties de miroir (M1_{T}, M1_{R}) du miroir primaire (M1) qui est plus proche de l'axe optique (A-A) du télescope (10) est celle qui est dédiée à réfléchir les signaux lumineux transmis (T) de manière que lesdits signaux lumineux transmis tels que délivrés par le système de délivrance de lumière (20) se propagent le long de la direction de transmission à l'extérieur du terminal,
et que celle des deux parties de miroir (M1_{T}, M1_{R}) du miroir primaire (M1) qui est plus éloignée de l'axe optique (A-A) du télescope (10) est celle qui est dédiée à réfléchir les signaux lumineux reçus (R) qui se sont propagés le long de la direction de réception à l'extérieur du terminal, de manière que lesdits signaux lumineux reçus soient focalisés sur le second emplacement (L2) dans le plan focal (FP).

6. Terminal (1) selon la revendication 5, comprenant en outre un écran opaque en forme de disque (33) qui est agencé entre le plan focal (FP) du télescope (10) et un dernier miroir dudit télescope, de manière à occlure au moins partiellement un intérieur d'un cône interne (C₁) d'un faisceau des signaux lumineux reçus (R).

7. Terminal (1) selon l'une quelconque des revendications 4 à 6, dans lequel le système de délivrance de lumière (20) comprend au moins une lentille composée d'un matériau réfringent délimité par des surfaces d'entrée et de sortie de lentille, une desdites surfaces d'entrée et de sortie de lentille étant conique et l'autre desdites surfaces d'entrée et de sortie de lentille étant toroïdale,
ledit système de délivrance de lumière (20) étant agencé de manière que les signaux lumineux transmis (T) se propagent à travers ladite au moins une lentille, et ladite au moins une lentille étant conçue de manière que lesdits signaux lumineux transmis aient, entre le système de délivrance de lumière et le télescope (10), une intensité maximale entre un cône interne (C₁) et un cône externe (C₂), et des valeurs d'intensité à l'intérieur du cône interne et à l'extérieur du cône externe qui sont inférieures à des valeurs d'intensité effectives entre les cônes interne et externe, et de manière que lesdits cônes interne et externe coïncident avec des bords interne (E₁) et externe (E₂), respectivement, de la partie de miroir (M1_{T}) dédiée à réfléchir les signaux lumineux transmis (T).

8. Terminal (1) selon la revendication 7, dans lequel le système de délivrance de lumière (20) comprend deux lentilles (22, 23) agencées de manière que les signaux lumineux transmis (T) se propagent à travers lesdites deux lentilles en série, et comprend en outre un dispositif de réglage d'étalement de faisceau (24) adapté pour ajuster une distance de séparation entre les deux lentilles, de manière à régler un étalement angulaire des signaux lumineux transmis.

9. Terminal (1) selon l'une quelconque des revendications précédentes, dans lequel le système de délivrance de lumière (20) et la section de détection de lumière (30) sont contenues dans des premier (200) et second (300) boîtiers opaques séparés, respectivement, le premier boîtier étant muni d'une première fenêtre (W₂₀₀) pour que les signaux lumineux transmis (T) sortent dudit premier boîtier, et le second boîtier étant muni d'une seconde fenêtre (W₃₀₀) pour que les signaux lumineux reçus (R) entrent dans ledit second boîtier.

10. Terminal (1) selon l'une quelconque des revendications précédentes, comprenant en outre un système supplémentaire de délivrance de lumière (20') qui est agencé pour délivrer des signaux lumineux supplémentaires à transmettre par le terminal à travers le télescope (10) tout en provenant de la zone de source qui est située au premier emplacement (L1) dans le plan focal (FP), ou résultant de la zone de source virtuelle située audit premier emplacement dans le plan focal, et dans lequel le système de délivrance de lumière (20) et le système supplémentaire de délivrance de lumière sont adaptés de manière que des polarisations respectives des signaux lumineux transmis (T) et des signaux lumineux supplémentaires transmis soient orthogonales entre elles.

11. Terminal (1) selon la revendication 10, dans lequel les polarisations respectives des signaux lumineux transmis (T) et des signaux lumineux supplémentaires transmis sont des polarisations linéaires qui sont perpendiculaires entre elles.

12. Terminal (1) selon la revendication 10 ou 11, dans lequel le système supplémentaire de délivrance de lumière (20') comprend un système de réglage de superposition (26) adapté pour déplacer un emplacement dans le plan focal (FP) où les signaux lumineux supplémentaires transmis coupent ledit plan focal, de manière que ledit emplacement soit superposé au premier emplacement (L1) tel que mis en oeuvre par le système de délivrance de lumière (20).

13. Satellite (100) comprenant un terminal de communication laser (1) qui est selon l'une quelconque des revendications 1 à 12, ledit terminal étant embarqué sur le satellite.

14. Procédé pour mettre en oeuvre une communication entre un premier terminal de communication laser et un second terminal de communication laser, dans lequel au moins un desdits premier et second terminaux de communication laser, appelé terminal à séparation en champ, est selon l'une quelconque des revendications 1 à 12.

15. Procédé selon la revendication 14, dans lequel le terminal de séparation en champ est embarqué sur un satellite (100) qui est en orbite autour de la Terre.
